# EUROPEAN PATENT SPECIFICATION

(11) **EP 4 130 540 B1**
(45) Date of publication and mention of the grant of the patent: **20.11.2024**
(21) Application number: 21780585.2
(22) Date of filing: 30.03.2021
(51) Int. Cl.: F16T 1/00, F16T 1/38

(54) **PRESSURE REDUCTION MECHANISM AND STEAM TRAP SYSTEM**
DRUCKREDUZIERUNGSMECHANISMUS UND KONDENSATABLEITERSYSTEM
MÉCANISME DE RÉDUCTION DE PRESSION ET SYSTÈME DE PIÈGE À VAPEUR

(30) Priority: 30.03.2020 JP 2020060135
(43) Date of publication of application: 08.02.2023
(73) Proprietor: Eco First Co. Ltd., Tokyo 160-0022 (JP)
(72) Inventor: KATSURA Tsutomu, Tokyo 160-0022 (JP)
(74) Representative: Schön, Christoph
(86) International application number: PCT/JP2021/013622
(87) International publication number: WO 2021/200995

(56) References cited:
- JP-B1- 5 694 619
- KR-A- 20170 126 644
- US-A- 2 390 749
- US-A- 2 390 749
- US-A1- 2013 199 649

## Description

### [Technical Field]

The present invention relates to a pressure reduction mechanism and a steam trap system including this pressure reduction mechanism and a steam trap.

### [Background Art]

Various facilities, such as factories and offices, which use steam as a heat source via heat exchangers use steam traps to automatically discharge, to outside of a steam transport piping system, a drain liquid (condensate resulting from condensation of steam) produced in pieces of steam using equipment and the steam transport piping system between these pieces of equipment.

This is to ensure appropriate temperature conditions in the pieces of steam using equipment, such as heating machines, drying machines, and heaters, which use high-temperature and high-pressure steam obtained with a boiler at heat exchange units and in a steam transport piping system connecting the boiler and the pieces of steam using equipment. If, for example, a drain liquid stays in a piece of steam using equipment, the heating efficiency of that piece of equipment drops, which significantly lowers its productivity. Moreover, droplets of the drain liquid cause heating unevenness, which may be a cause of deterioration in product quality and impair the stable operation of the factory or the like. Also, if a drain liquid stays within the steam transport piping system, it may be a cause of an extremely dangerous steam hammer and impair the safe operation of the factory. This steam hammer refers to a phenomenon in which, for example, a drain liquid staying within the steam transport piping system forms a large mass while being pushed by steam to flow, and collides with a curved portion of a pipe or a valve. The steam hammer refers alternatively to a phenomenon in which, when a drain liquid staying within the steam transport piping system comes into contact with steam, the steam gets condensed at a stretch, so that the volume of the steam reduces to zero and the drain liquid rushes to and collides with where a vacuum state is locally formed.

There are various types of steam traps. Examples include mechanical engineering-based mechanical steam traps (bucket type and float type), thermostatic steam traps (bimetal type and bellows type), and thermodynamic steam traps (disc type) as steam traps having a movable part. For example, Patent Literature 1 discloses an example of the float-type steam trap.

Also, as steam traps having no particular movable part, there are nozzle-type steam traps as represented by orifice nozzle-type, Venturi nozzle-type, and tunnel-structured resistance tube-type steam traps (see Patent Literature 2, for example). These nozzle-type steam traps are called fluidics-based steam traps and utilize the nature that, when passing through a small passage, water (liquid water) is lower in kinetic viscosity than steam and water is approximately 30 times higher in fluidity than steam.

Patent Literature 3 discloses a flange 92 with a central flow hole 94 therethrough and a pressure reducer 40 that is secured to the flange 92. The pressure reducer 40 is adapted for use along a pipe line 90. The flow hole 94 is aligned with an inlet 62 of an inner annular sleeve 58 of the pressure reducer 40. Pressurized fluid flow from an upstream side of the pipe line 90 flows through the flow hole 94, through the pressure reducer 40, and to a downstream side of the pressure reducer 40.

### [Citation List]

### [Patent Literatures]

[Patent Literature 1] Japanese Patent No. 6322476
[Patent Literature 2] Japanese Patent Application Publication No. 2018-80731
[Patent Literature 3] United States Patent Application Publication No. 2013/0199649
[Patent Literature 4] Japanese Patent No. 5694619

### [Summary of Invention]

### [Technical Problem to be Solved]

Here, since steam traps are used for pipes through which high-temperature and high-pressure steam flows, various improvements to withstand that environment have been proposed, and some of those have already been in practical use. Generally, the materials of constituent members of steam traps are selected or the shapes of contact portions of their movable parts are devised so as to enhance their durability and thus extend their service lives. However, in recent years, steam traps are being used in a wider range of locations and environments. For example, steam traps are being used for pipes through which higher-pressure steam flows. Thus, there is an even higher demand for extending the service lives of steam traps.

An object of the present invention is to provide a configuration capable of contributing to extending the service life of a steam trap.

### [Solution to Problem]

An aspect of an embodiment of the present invention is exemplarily represented by a pressure reduction mechanism including a pressure reduction part and being to be provided upstream of a steam trap so as to reduce a pressure of a fluid to be supplied into the steam trap.

The pressure reduction part includes a flow-passage narrowing portion, the flow-passage narrowing portion defining and forming a hole extending in a flow direction and having such a dimension as to always permit a free flow of steam therethrough.

Preferably, the flow-passage narrowing portion has a substantially flat surface facing an upstream side in the flow direction. In this case, the flow-passage narrowing portion is advantageously formed such that the hole is open on the surface and the hole has a cross-sectional area that is substantially constant in the flow direction. Alternatively, the flow-passage narrowing portion may be formed such that the hole is open on the surface and the hole becomes wider from the surface toward a downstream side in the flow direction.

Preferably, the flow-passage narrowing portion includes a flat plate-shaped portion having the hole. This flat plate-shaped portion advantageously extends substantially perpendicularly to the flow direction.

Preferably, the above pressure reduction mechanism includes a plurality of the flow-passage narrowing portions, and the plurality of flow-passage narrowing portions are disposed to be spaced in the flow direction. In this case, the hole in each of the plurality of flow-passage narrowing portions is advantageously disposed to be offset from the hole in an adjacent one of the flow-passage narrowing portions. Note that the plurality of holes in the plurality of flow-passage narrowing portions can also be disposed to be located linearly in the flow direction.

Another aspect of an embodiment of the present invention is exemplarily represented by a steam trap system including the pressure reduction mechanism having any one of the above configurations, and a steam trap disposed downstream of this pressure reduction mechanism. For example, the steam trap is a nozzle-type steam trap.

### [Advantageous Effect of Invention]

The above pressure reduction mechanism can contribute to extending the service life of a steam trap.

### [Brief Description of Drawings]

[FIG. 1] FIG. 1 is a schematic cross-sectional view of a steam trap system including a pressure reduction mechanism according to a first embodiment of the present invention.
[FIG. 2] FIG. 2 is a cross-sectional view schematically illustrating a modification of the pressure reduction mechanism in FIG. 1.
[FIG. 3] FIGS. 3A and 3B are views schematically illustrating a pressure reduction mechanism according to a second embodiment of the present invention as a further modification of the pressure reduction mechanism in FIG. 1, FIG. 3A being a view as seen from an upstream side in a flow direction and FIG. 3B being a cross-sectional view along the flow direction taken along the IIIB-IIIB line of FIG. 3A.
[FIG. 4] FIG. 4 is a view schematically illustrating a modification of the pressure reduction mechanism in FIG. 3 and is a view corresponding to FIG. 3A as seen from an upstream side in a flow direction.

### [Description of Embodiments]

Pressure reduction mechanisms and steam trap systems including these pressure reduction mechanisms and steam traps according to embodiments of the present invention will be described below with reference to the drawings. A first embodiment will be described first.

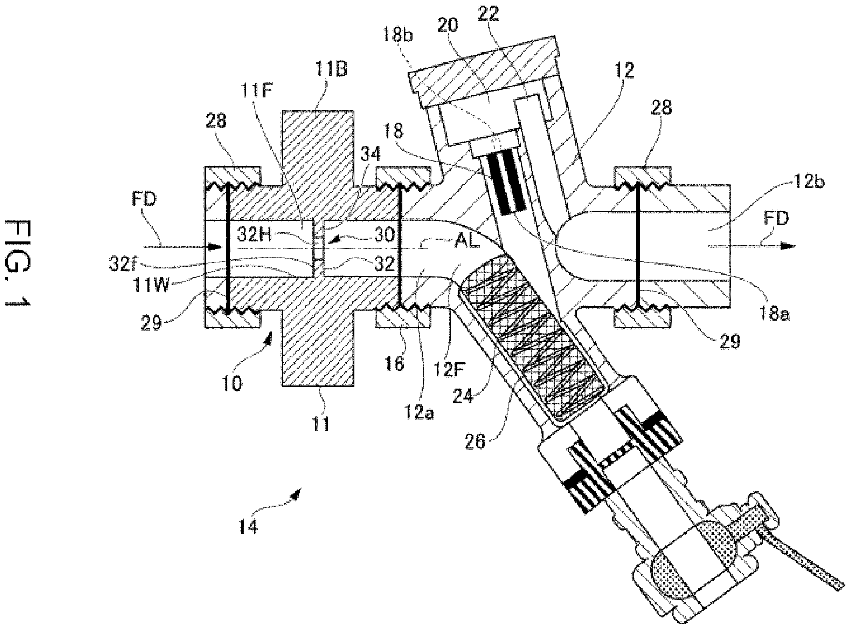

A pressure reduction mechanism 10 according to the first embodiment is provided upstream of a steam trap 12. In the present embodiment, the pressure reduction mechanism 10 is embodied as a pressure reduction device 11. A steam trap system 14 illustrated in FIG. 1 includes the pressure reduction device 11, which includes the pressure reduction mechanism 10, and the steam trap 12 disposed downstream thereof. Here, the pressure reduction device 11 is connected to a fluid inlet portion 12a of the steam trap 12 by a nut 16. However, the pressure reduction device 11 and the steam trap 12 may be connected by different mechanical means.

Here, the steam trap 12 will be briefly described first. The steam trap 12 is a nozzle-type steam trap. The steam trap 12 has a fluid flow passage 12F extending from the fluid inlet portion 12a to a fluid outlet portion 12b. A nozzle 18 is disposed at an intermediate portion of that fluid flow passage 12F. The nozzle 18 has a hole 18a and, at the downstream end of the hole 18a, has a nozzle outlet 18b as a drain port through which to discharge a drain liquid. The nozzle outlet 18b communicates with a drain-liquid reservoir 20. A drain-liquid discharge port 22 for discharging the drain liquid from the drain-liquid reservoir 20 to the outside of the steam trap 12 communicates with the drain-liquid reservoir 20. Moreover, in the steam trap 12, a strainer 26 including a screen 24 is disposed downstream of the fluid inlet portion 12a and upstream of the nozzle 18.

In the steam trap 12 having the above configuration, steam and a drain liquid from a pipe through which high-temperature and high-pressure steam flows, for example, enter the flow passage 12F from the fluid inlet portion 12a. Rust and dust in the steam and drain liquid are captured by the screen 24, which has minute meshes. The small hole 18a defined and formed in the nozzle 18 is designed to have such a hole size as to let the drain liquid pass through the hole 18a without practically letting the steam pass therethrough, by utilizing the nature that, when passing through a small passage, water (liquid water) is lower in kinetic viscosity than steam and water is higher in fluidity than steam. Accordingly, only the drain liquid is mainly discharged from the nozzle outlet 18b of the nozzle 18 into the drain-liquid reservoir 20. The drain liquid in the drain-liquid reservoir 20 seals the nozzle 18. This can prevent leakage of the steam. Thus, the steam trap 12 practically enables drainage of only the drain liquid. Note that the height difference between the drain port 18b and the drain-liquid discharge port 22 in the drain-liquid reservoir 20 can be adjusted by turning the steam trap 12 itself. Doing so can adjust the amount of the drain liquid to be discharged from the steam trap 12 (see Patent Literature 4, for example).

Note that, in FIG. 1, the upstream end and the downstream end of the steam trap system 14 are connected to respective pipes. Unions 28 are used for the connections to those pipes. However, the steam trap system 14 may be connected to the pipes by different means. Note that reference sign 29 denotes a packing.

Incidentally, the pressure reduction device 11 employing the pressure reduction mechanism 10 is provided upstream of this steam trap 12. In particular, in the steam trap system 14 in FIG. 1, the pressure reduction device 11 is provided adjacent to the fluid inlet portion 12a of the steam trap 12.

The pressure reduction device 11 includes a body 11B in which is defined and formed a flow passage 11F communicating with the fluid flow passage 12F in the steam trap 12. Here, the upstream end of the flow passage 11F communicates smoothly with a pipe as illustrated in FIG. 1, and the downstream end of the flow passage 11F communicates smoothly with the fluid flow passage 12F as illustrated in FIG. 1. Moreover, a pressure reduction part 30 of the pressure reduction mechanism 10 is provided in that flow passage 11F. The pressure reduction part 30 includes a flow-passage narrowing portion 32. The flow-passage narrowing portion 32 defines and forms a hole 32H extending in a flow direction FD and having such a dimension as to permit a flow of steam therethrough.

The flow-passage narrowing portion 32 is formed to include a flat plate-shaped portion 34 having the hole 32H. The flat plate-shaped portion 34 extends substantially perpendicularly to the flow direction FD. Specifically, the flat plate-shaped portion 34 extends substantially perpendicularly to an axis AL of the flow passage 11F extending in the flow direction, and extends to a substantially cylindrical inner wall 11W defining and forming the flow passage 11F.

Here, the flow-passage narrowing portion 32 includes the flat plate-shaped portion 34, as mentioned above. Thus, the flow-passage narrowing portion 32 has a substantially flat surface 32f facing the upstream side in the flow direction FD (hereinafter, the upstream surface). Note that the flow-passage narrowing portion 32 here includes the flat plate-shaped portion 34 and therefore also has a substantially flat surface facing the downstream side in the flow direction on the side downstream of the upstream surface 32f.

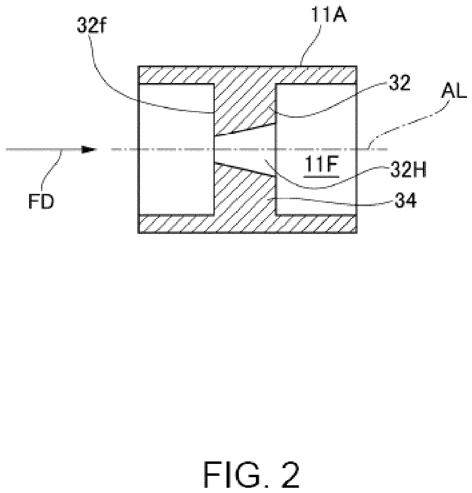

Moreover, the flow-passage narrowing portion 32, i.e., the flat plate-shaped portion 34, is formed such that the hole 32H is open on the upstream surface 32f and the hole 32H has a cross-sectional area that is substantially constant in the flow direction FD. Note that, like a pressure reduction device 11A as a modification of the pressure reduction device 11 schematically illustrated in FIG. 2, the hole 32H may be defined and formed to become wider from the upstream surface 32f toward the downstream side in the flow direction FD.

This hole 32H is defined and formed to extend in the flow direction and have such a dimension as to permit a flow of steam therethrough. To permit a flow of steam means to permit sufficient passage of not only a drain liquid but also steam. Thus, the hole 32H is not designed to expect only a drain liquid to preferentially pass therethrough. Note that the hole 32H is positioned substantially at the cross-sectional center to be located on the axis AL of the flow passage 11F, but may be positioned off that center to be offset in the radial direction, for example. In the case where the hole 32H is provided off the center, the hole 32H is advantageously designed to be located on an upper side in the vertical direction, rather than a lower side, when used. This is to prevent backflow of a drain liquid through the hole 32H.

Also, the flow-passage narrowing portion 32 defining and forming the hole 32H is disposed substantially at the center of the flow passage 11F in the pressure reduction device 11 in the flow direction. Accordingly, a space of a sufficient size is formed both upstream and downstream of the flow-passage narrowing portion 32. For example, the inner diameter of the hole 32H is designed to be a dimension of approximately 1/3 to approximately 1/5 of the inner diameter of the flow passage 11F upstream and downstream of the hole 32H, and is advantageously a dimension of approximately 1/4, for example. Thus, the hole 32H in the flow-passage narrowing portion 32 is what is called an orifice.

Since the pressure reduction mechanism 10 of the pressure reduction device 11 is configured as described above, high-temperature and high-pressure steam is reduced in pressure by passing through the hole 32H in the pressure reduction device 11. Thus, the fluid (i.e., the steam and the drain liquid) reduced in pressure is supplied into the steam trap 12. This sufficiently lowers the degree of exposure of the steam trap 12 to high-temperature and high-pressure steam and can accordingly extend its service life. As described above, the pressure reduction device 11, i.e., the pressure reduction mechanism 10, can contribute to extending the service life of the steam trap 12.

Next, a second embodiment will be described. A steam trap system according to the second embodiment includes a pressure reduction mechanism 110 and a steam trap 12 provided downstream thereof. The steam trap 12 is the one already described. Thus, the pressure reduction mechanism 110 according to the second embodiment will be mainly described below. Note that, in the following, constituent elements equivalent to constituent elements already described are denoted by the same reference signs as the above, and overlapping description will be omitted.

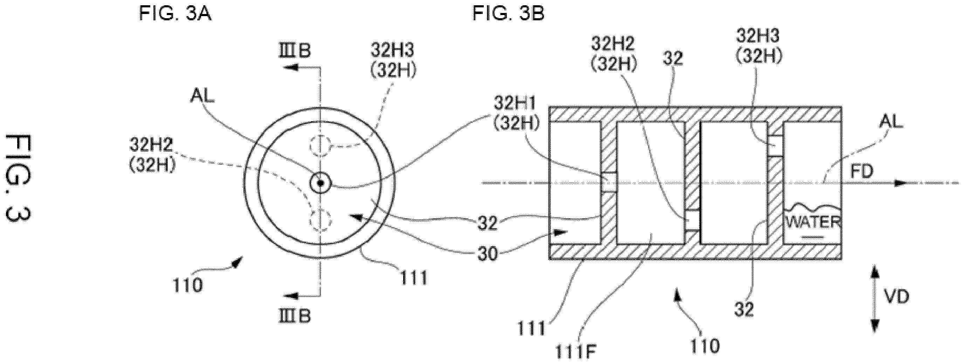

The pressure reduction mechanism 110 is embodied as a pressure reduction device 111. As illustrated in FIG. 3, the pressure reduction mechanism 110 of the pressure reduction device 111 includes a pressure reduction part 30, and includes a plurality of flow-passage narrowing portions 32. The plurality of flow-passage narrowing portions 32 are disposed to be spaced in a flow direction FD. Each flow-passage narrowing portion 32 is formed to include a flat plate-shaped portion extending substantially perpendicularly to the flow direction FD and having a hole 32H. That is, the pressure reduction part 30 of the pressure reduction mechanism 110 includes pressure reduction components in a plurality of stages. Here, three flow-passage narrowing portions 32 are provided, but the number of flow-passage narrowing portions 32 may be two or four or more.

FIG. 3A is a schematic view illustrating the three flow-passage narrowing portions 32 in a flow passage 111F in the pressure reduction device 111 as seen from an upstream side, and FIG. 3B is a cross-sectional view of the pressure reduction device 111 taken along the IIIB-IIIB line of FIG. 3A. Note that a description will be continued below on the assumption that the pressure reduction device 111 is used in an orientation as illustrated in FIGS. 3A and 3B.

As is obvious from FIGS. 3A and 3B, the hole 32H in each of the plurality of flow-passage narrowing portions 32 is disposed to be offset from the hole 32H in the adjacent flow-passage narrowing portion(s) 32, that is, offset in a direction perpendicular to the axis AL of the flow passage 111F. In the pressure reduction device 111, a most upstream hole 32H1 is positioned substantially at the cross-sectional center, a middle hole 32H2 in the flow direction is provided to be located on a lower side in a vertical direction VD, and a most downstream hole 32H3 is provided to be located on an upper side in the vertical direction VD. This can lower the degree to which steam having passed through one hole 32H directly passes through the next hole 32H, and accordingly enhance the pressure reduction effect. Note that the reason for positioning the most downstream hole 32H3 on the upper side in the vertical direction is mainly to prevent backflow of a drain liquid (i.e., liquid water) through the hole 32H3, as schematically illustrated in FIG. 3B.

Since the pressure reduction mechanism 110 of the pressure reduction device 111 is configured as described above, high-temperature and high-pressure steam is reduced in pressure by passing through the plurality of holes 32H one by one. Hence, in the steam trap system according to the second embodiment, steam and the like reduced in pressure in a stepwise manner by the plurality of holes 32H in the pressure reduction mechanism 110 is supplied into the steam trap 12. This sufficiently lowers the degree of exposure of the steam trap 12 to high-temperature and high-pressure steam and can accordingly extend its service life.

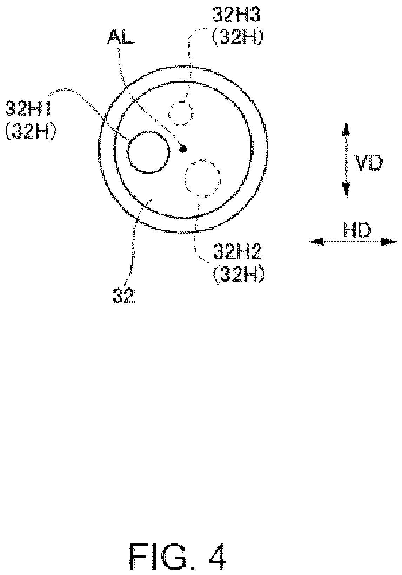

Note that, in the pressure reduction device 111, the sizes of the holes 32H in the plurality of flow-passage narrowing portions 32 are the same but may be different. For example, as illustrated in FIG. 4, the upstream hole 32H1 may be the largest in diameter, and the holes 32H2 and 32H3 may be smaller in this order. Further, the holes 32H1, 32H2, and 32H3 may be offset not only in the vertical direction VD but also in a horizontal direction HD, as illustrated in FIG. 4. In the case of providing a plurality of flow-passage narrowing portions 32, the sizes and positions of their holes 32H are advantageously designed with at least one of, and preferably both of, pressure reduction of steam and backflow of a drain liquid into consideration. Note that it is possible to select a linear arrangement of the plurality of holes 32H in the flow direction, i.e., an arrangement in which the plurality of holes 32H overlap each other in a drawing corresponding to FIG. 3A or 4.

While two embodiments and modifications thereof have been described above, the present invention is not limited to these. For example, the pressure reduction devices 11 and 111 are mechanically mounted in a detachable manner to the steam trap 12. However, the pressure reduction devices 11 and 111 may be fixed to the steam trap 12 by welding or the like. Also, in the above embodiments and the like, a single hole 32H is provided in a single flow-passage narrowing portion 32. However, a plurality of holes may be provided in a single flow-passage narrowing portion 32.

Also, the pressure reduction mechanisms are not limited to the configurations including the hole(s) 32H, i.e., orifice(s), and may be formed to include a movable part, for example. For instance, the pressure reduction mechanisms may have a pressure reducing valve to enable adjustment of the pressure reduction effect via adjustment of the opening degree of that valve.

Also, the steam trap systems including the pressure reduction mechanisms may comprise a nozzle-type steam trap having a different configuration from that of the above steam trap 12. Alternatively, the steam trap systems including the pressure reduction mechanisms may comprise a steam trap of a type other than the nozzle type, e.g., a steam trap including a movable part.

While two embodiments and modifications thereof have been described above, the present invention is not limited to those. The scope of the present invention should be defined by the claims of the present application.

### [Reference Signs List]

- 10, 110: pressure reduction mechanism
- 11, 111: pressure reduction device
- 12: steam trap
- 14: steam trap system
- 32: flow-passage narrowing portion
- 32H: hole
- 18: nozzle
- 18a: hole
- 20: drain-liquid reservoir
- 22: drain-liquid discharge port
- 24: screen
- 26: strainer
- 28: union
- 29: packing
- 30: pressure reduction part
- 32: flow-passage narrowing portion
- 32f: upstream surface
- 32H: hole
- 34: flat plate-shaped portion

## Claims

1. A pressure reduction mechanism (10, 110) to be provided upstream of a steam trap (12) so as to reduce a pressure of a fluid to be supplied into the steam trap, comprising
a pressure reduction part (30), wherein
the pressure reduction part includes a flow-passage narrowing portion (32), and
the flow-passage narrowing portion defines and forms a hole (32H) extending in a flow direction and having such a dimension as to always permit a free flow of steam therethrough.

2. The pressure reduction mechanism according to claim 1, wherein the flow-passage narrowing portion defines and forms the only one hole.

3. The pressure reduction mechanism according to claim 1 or 2, wherein
the flow-passage narrowing portion includes a flat plate-shaped portion (34) having the hole, and
the flat plate-shaped portion extends substantially perpendicularly to the flow direction.

4. The pressure reduction mechanism according to any one of claims 1 to 3, wherein an inner diameter of the hole is designed to be a dimension of approximately 1/3 to approximately 1/5 of an inner diameter of flow passages upstream and downstream of the hole.

5. The pressure reduction mechanism according to any one of claims 1 to 4, wherein the flow-passage narrowing portion has a substantially flat surface (32f) facing an upstream side in the flow direction.

6. The pressure reduction mechanism according to claim 5, wherein the flow-passage narrowing portion is formed such that the hole is open on the surface and the hole has a cross-sectional area that is substantially constant in the flow direction.

7. The pressure reduction mechanism according to claim 5, wherein the flow-passage narrowing portion is formed such that the hole is open on the surface and the hole becomes wider from the surface toward a downstream side in the flow direction.

8. The pressure reduction mechanism according to any one of claims 1 to 7, wherein
the pressure reduction mechanism includes a plurality of the flow-passage narrowing portions, and
the plurality of flow-passage narrowing portions are disposed to be spaced in the flow direction.

9. The pressure reduction mechanism according to claim 8, wherein the hole in each of the plurality of flow-passage narrowing portions is disposed to be offset from the hole in an adjacent one of the flow-passage narrowing portions.

10. A steam trap system comprising:
the pressure reduction mechanism according to any one of claims 1 to 9; and
a steam trap disposed downstream of the pressure reduction mechanism.

11. The steam trap system according to claim 10, wherein the steam trap is a nozzle-type steam trap.

## Patentansprüche

1. Druckverminderungsmechanismus (10, 110), der stromaufwärts eines Kondensatableiters (12) vorzusehen ist, um den Druck eines in den Kondensatableiter einzuspeisenden Fluids zu vermindern, umfassend
einen Druckverminderungsabschnitt (30), wobei
der Druckverminderungsabschnitt einen den Strömungskanal verengenden Abschnitt (32) umfasst, und
der Strömungskanal-verengende Abschnitt ein Loch (32H) definiert und bildet, das sich in Strömungsrichtung erstreckt und eine solche Abmessung aufweist, dass es stets ein freies Hindurchströmen des Dampfes ermöglicht.

2. Druckverminderungsmechanismus gemäß Anspruch 1, wobei der den Strömungskanal verengende Abschnitt das einzige Loch definiert und bildet.

3. Druckverminderungsmechanismus gemäß Anspruch 1 oder Anspruch 2, wobei
der den Strömungskanal verengende Abschnitt einen flachen plattenförmigen Abschnitt (34), der ein Loch aufweist, umfasst, und
der flache plattenförmige Abschnitt sich im Wesentlichen senkrecht zur Strömungsrichtung erstreckt.

4. Druckverminderungsmechanismus gemäß einem der Ansprüche 1 bis 3, wobei ein Innendurchmesser des Lochs so ausgestaltet ist, dass er eine Abmessung von näherungsweise 1/3 bis näherungsweise 1/5 eines Innendurchmessers der Strömungskanäle stromaufwärts und stromabwärts des Lochs aufweist.

5. Druckverminderungsmechanismus gemäß einem der Ansprüche 1 bis 4, wobei der den Strömungskanal verengende Abschnitt eine im Wesentlichen flache Oberfläche (32f) aufweist, die einer stromaufwärtigen Seite in Strömungsrichtung zugewandt ist.

6. Druckverminderungsmechanismus gemäß Anspruch 5, wobei der den Strömungskanal verengende Abschnitt so geformt ist, dass das Loch an der Oberfläche offen ist und das Loch eine Querschnittsfläche aufweist, die in der Strömungsrichtung im Wesentlichen konstant ist.

7. Druckverminderungsmechanismus gemäß Anspruch 5, wobei der den Strömungskanal verengende Abschnitt so geformt ist, dass das Loch an der Oberfläche offen ist und sich das Loch von der Oberfläche in Richtung einer stromabwärtigen Seite in der Strömungsrichtung erweitert.

8. Druckverminderungsmechanismus gemäß einem der Ansprüche 1 bis 7, wobei
der Druckverminderungsmechanismus mehrere den Strömungskanal verengende Abschnitte umfasst, und
die mehreren den Strömungskanal verengenden Abschnitte so angeordnet sind, dass sie in Strömungsrichtung zueinander beabstandet sind.

9. Druckverminderungsmechanismus gemäß Anspruch 8, wobei das Loch in jedem der mehreren den Strömungskanal verengenden Abschnitte so angeordnet ist, dass es gegenüber dem Loch in einem benachbarten der den Strömungskanal verengenden Abschnitte versetzt ist.

10. Kondensatableitersystem, umfassend:
den Druckverminderungsmechanismus gemäß einem der Ansprüche 1 bis 9; und
einen Kondensatableiter, der stromabwärts des Druckverminderungsmechanismus angeordnet ist.

11. Kondensatableitersystem gemäß Anspruch 10, wobei der Kondensatableiter ein Kondensatableiter vom Düsen-Typ ist.

## Revendications

1. Mécanisme de réduction de pression (10, 110) destiné à être disposé en amont d'un piège à vapeur (12) de manière à réduire la pression d'un fluide à fournir dans le piège à vapeur, comprenant
une pièce de réduction de pression (30),
la pièce de réduction de pression comprenant une section de rétrécissement de passage d'écoulement (32), et
la section de rétrécissement de passage d'écoulement définissant et formant un trou (32H) s'étendant dans une direction d'écoulement et ayant une dimension telle qu'il permette toujours un écoulement libre de vapeur à travers celui-ci.

2. Mécanisme de réduction de pression selon la revendication 1, dans lequel la section de rétrécissement de passage d'écoulement définit et forme le seul trou.

3. Mécanisme de réduction de pression selon la revendication 1 ou 2, dans lequel la section de rétrécissement de passage d'écoulement comprend une partie plate en forme de plaque (34) présentant le trou, et
la partie plate en forme de plaque s'étend sensiblement perpendiculairement à la direction d'écoulement.

4. Mécanisme de réduction de pression selon l'une quelconque des revendications 1 à 3, dans lequel un diamètre intérieur du trou est conçu pour avoir une dimension représentant approximativement 1/3 à approximativement 1/5 d'un diamètre intérieur de passages d'écoulement en amont et en aval du trou.

5. Mécanisme de réduction de pression selon l'une quelconque des revendications 1 à 4, dans lequel la section de rétrécissement de passage d'écoulement a une surface sensiblement plate (32f) faisant face à un côté amont dans la direction d'écoulement.

6. Mécanisme de réduction de pression selon la revendication 5, dans lequel la section de rétrécissement de passage d'écoulement est formée de telle sorte que le trou soit ouvert sur la surface et que le trou ait une aire de section transversale qui est sensiblement constante dans la direction d'écoulement.

7. Mécanisme de réduction de pression selon la revendication 5, dans lequel la section de rétrécissement de passage d'écoulement est formée de telle sorte que le trou soit ouvert sur la surface et que le trou s'agrandisse à partir de la surface vers un côté aval dans la direction d'écoulement.

8. Mécanisme de réduction de pression selon l'une quelconque des revendications 1 à 7, dans lequel
le mécanisme de réduction de pression comprend une pluralité de sections de rétrécissement de passage d'écoulement, et
la pluralité de sections de rétrécissement de passage d'écoulement sont disposées de manière à être espacées dans la direction d'écoulement.

9. Mécanisme de réduction de pression selon la revendication 8, dans lequel le trou pratiqué dans chacune de la pluralité de sections de rétrécissement de passage d'écoulement est disposé de manière à être décalé par rapport au trou pratiqué dans une section adjacente parmi les sections de rétrécissement de passage d'écoulement.

10. Système de piège à vapeur comprenant :
le mécanisme de réduction de pression selon l'une quelconque des revendications 1 à 9 ; et
un piège à vapeur disposé en aval du mécanisme de réduction de pression.

11. Système de piège à vapeur selon la revendication 10, dans lequel le piège à vapeur est un piège à vapeur de type buse.
